# EUROPEAN PATENT APPLICATION

(11) **EP 4 822 768 A1**
(43) Date of publication of application: **14.10.2026**
(21) Application number: 25739185.4
(22) Date of filing: 13.01.2025
(51) Int. Cl.: H01M 4/36, H01M 4/505, H01M 4/525, H01M 4/131, H01M 10/052, C01G 53/50, H01M 4/02

(54) **CATHODE ACTIVE MATERIAL, METHOD FOR PREPARING SAME, AND CATHODE AND LITHIUM SECONDARY BATTERY EACH COMPRISING SAME**

(30) Priority: 11.01.2024 KR 20240005034
(71) Applicant: LG Chem, Ltd., Seoul 07336 (KR)
(72) Inventor: WON, Jae Hee, Daejeon 34122 (KR); KIM, Won Tae, Daejeon 34122 (KR); KIM, Jun Gil, Daejeon 34122 (KR); LIM, Young Geun, Daejeon 34122 (KR); KIM, Ju Hyun, Daejeon 34122 (KR)
(74) Representative: Hoffmann Eitle
(86) International application number: PCT/KR2025/000741
(87) International publication number: WO 2025/151017

(57) **Abstract**

The present invention relates to a positive electrode active material which includes a lithium-rich manganese-based oxide simultaneously including a Li₂MnO₃ phase and a LiM'O₂ (where M' is an element including at least one selected from Ni and Mn) phase; and a coating portion formed on the lithium-rich manganese-based oxide, wherein the lithium-rich manganese-based oxide includes at least two doping elements (Q) selected from W, Al, Co, Zr, Re, V, Cr, Fe, Ga, Si, B, Ru, Ti, Nb, Mo, Mg, Na, and Pt, and the coating portion includes at least one coating element (R) selected from Zn, Al, Co, Ti, Nb, V, Mo, W, B, and Ni, and satisfies Equation 1 described in this specification, a method of preparing the same, and a positive electrode and a lithium secondary battery which include the same.

## Description

### TECHNICAL FIELD

### Cross-reference to Related Applications

This application claims priority from Korean Patent Application No. 10-2024-0005034, filed on January 11, 2024, the disclosure of which is incorporated by reference herein.

### Technical Field

The present invention relates to a positive electrode active material, a method of preparing the same, and a positive electrode and a lithium secondary battery which include the same.

### BACKGROUND ART

A lithium secondary battery is composed of four major components such as a positive electrode, a negative electrode, a separator, and an electrolyte. Among them, a positive electrode active material included in the positive electrode is a material that plays a major role in determining capacity, output, and lifetime of the battery. An improvement in performance of the positive electrode active material is essential in order for the lithium secondary battery to have high energy density, output, and lifetime, and, as a result, a significant amount of research has been conducted recently to develop a high-performance positive electrode active material.

A lithium-rich oxide (Li-rich layered oxide), a type of the positive electrode active material, is a mixed phase in which a Li₂MnO₃ phase and a LiM'O₂ (where M' is an element including at least one selected from nickel (Ni), manganese (Mn), and cobalt (Co)) phase are mixed, wherein it has a characteristic of providing a very high capacity of 250 mAh/g at a high operating voltage (>3.5 V vs. Li/Li⁺). Thus, the lithium-rich oxide has received attention as a high-capacity positive electrode active material.

However, the lithium-rich oxide has problems arising from structural characteristics in which the two phases are mixed. Specifically, when a battery including the lithium-rich oxide is operated at a high voltage, there is a problem in that irreversible capacity loss occurs in a first formation process to reduce efficiency, and there is a problem in that resistance is increased and O₂ gas is generated while voltage fading occurs as a layered structure changes to a rock-salt structure via a spinel structure during charge and discharge cycles.

Also, an increase in price of a cobalt raw material, which may be included in the lithium-rich oxide, is also emerging as a major issue. The price of the cobalt raw material is expected to continue to increase, and accordingly, there is a need to develop a positive electrode active material in which an amount of cobalt is reduced.

Thus, there is a need to secure a technique that improves capacity characteristics, resistance characteristics, life characteristics, and economic efficiency of the lithium-rich oxide.

### [Prior Art Documents]

### [Patent Documents]

(Patent Document 1) Korean Patent Application Laid-open Publication No. 10-2003-088247

### DISCLOSURE OF THE INVENTION

### TECHNICAL PROBLEM

An aspect of the present invention is to provide a positive electrode active material, which may improve capacity characteristics of a battery and may reduce costs, and a method of preparing the same.

Also, the present invention aims at providing a positive electrode and a lithium secondary battery which have excellent capacity characteristics and economic efficiency by including the above-described positive electrode active material.

### TECHNICAL SOLUTION

(1) The present invention provides a positive electrode active material including: a lithium-rich manganese-based oxide simultaneously including a Li₂MnO₃ phase and a LiM'O₂ (where M' is an element including at least one selected from nickel (Ni) and manganese (Mn)) phase; and a coating portion formed on the lithium-rich manganese-based oxide, wherein the lithium-rich manganese-based oxide includes at least two doping elements (Q) selected from tungsten (W), aluminum (Al), cobalt (Co), zirconium (Zr), rhenium (Re), vanadium (V), chromium (Cr), iron (Fe), gallium (Ga), silicon (Si), boron (B), ruthenium (Ru), titanium (Ti), niobium (Nb), molybdenum (Mo), magnesium (Mg), sodium (Na), and platinum (Pt), and the coating portion includes at least one coating element (R) selected from zinc (Zn), Al, Co, Ti, Nb, V, Mo, W, B, and Ni, and satisfying Equation 1. [Equation 1] 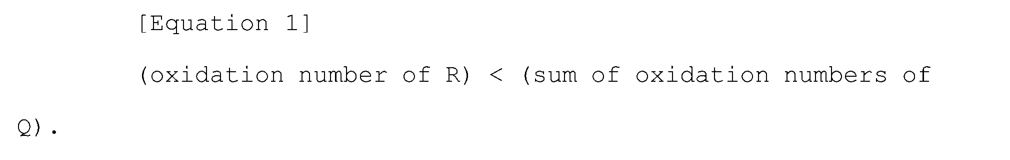 (oxidation number of R) < (sum of oxidation numbers of Q).
(2) The present invention provides the positive electrode active material of (1) above, wherein the lithium-rich manganese-based oxide has a composition represented by Formula 1 or Formula 2.

   [Formula 1] Li₁₊ₓMnₐ₁Ni_{b1}Q_{c1}O₂

   In Formula 1,
   Q includes at least two selected from W, Al, Co, Zr, Re, V, Cr, Fe, Ga, Si, B, Ru, Ti, Nb, Mo, Mg, Na, and Pt, and
   0.000<x≤0.200, 0.500≤a1<1.000, 0.200≤b1<0.500, and 0.0000<c1≤0.0300, and

      [Formula 2] αLi₂Mn_{1-c2}Q_{c2}O₃·βLi(Mnₐ₂Ni_{b2}Q_{c3})O₂
   In Formula 2,
   Q includes at least two selected from W, Al, Co, Zr, Re, V, Cr, Fe, Ga, Si, B, Ru, Ti, Nb, Mo, Mg, Na, and Pt, and
   0<α<1, 0<β<1, 0.0000≤c2≤0.0100, 0.000<a2≤0.500, 0.000<b2≤0.500 0.0000≤c3≤0.0100, a2+b2+c3=1.000, and c2+c3>0.0000.
(3) The present invention provides the positive electrode active material of (1) or (2) above, wherein an amount of the doping elements (Q) is in a range of 500 ppm to 13,000 ppm based on a total weight of the lithium-rich manganese-based oxide.
(4) The present invention provides the positive electrode active material of any one of (1) to (3) above, wherein a type of the coating portion is one of a film type, an island type, or a combination thereof.
(5) The present invention provides the positive electrode active material of any one of (1) to (4) above, wherein the coating portion includes at least one selected from R, an R-O compound, a Li-R-O compound, and a Li-M'-R-O compound.
(6) The present invention provides the positive electrode active material of any one of (1) to (5) above, wherein an amount of the coating portion is in a range of 0.05 part by weight to 0.3 part by weight based on 100 parts by weight of the lithium-rich manganese-based oxide.
(7) The present invention provides the positive electrode active material of any one of (1) to (6) above, wherein an amount of the coating element (R) included in the coating portion is in a range of 300 ppm to 4,000 ppm based on a total weight of the lithium-rich manganese-based oxide.
(8) The present invention provides the positive electrode active material of any one of (1) to (7) above, wherein the oxidation numbers of Q are in a range of 3 to 6.
(9) The present invention provides the positive electrode active material of any one of (1) to (8) above, wherein Q includes at least two selected from W, Al, Zr, Ti, Mo, and Co, and R includes at least one selected from Zn, Al, Co, Ti, Nb, V, Mo, and W.
(10) The present invention provides the positive electrode active material of any one of (1) to (9) above, wherein an average particle diameter (D₅₀) is in a range of 4 µm to 12 µm.
(11) The present invention provides a method of preparing a positive electrode active material which includes the steps of: (A) mixing a composite transition metal hydroxide, a lithium (Li)-containing raw material, and a raw material containing doping elements (Q) to prepare a mixture; (B) sintering the mixture to prepare a lithium-rich manganese-based oxide; and (C) mixing the lithium-rich manganese-based oxide with a coating element (R)-containing raw material and performing a heat treatment to form a coating portion, wherein the sintering is performed at a temperature of 800°C to 1,000°C in an air atmosphere, the doping elements (Q) are at least two selected from W, Al, Co, Zr, Re, V, Cr, Fe, Ga, Si, B, Ru, Ti, Nb, Mo, Mg, Na, and Pt, the coating element (R) is at least one selected from Zn, Al, Co, Ti, Nb, V, Mo, W, B, and Ni, and the doping elements (Q) and the coating element (R) satisfy Equation 1. [Equation 1] 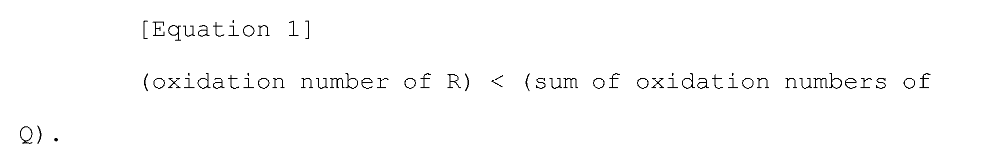 (oxidation number of R) < (sum of oxidation numbers of Q).
(12) The present invention provides the method of (11) above, wherein the raw material containing doping elements (Q) is at least one selected from oxide, carbonate, nitride, hydroxide, oxyhydroxide, and halide which include the doping elements (Q).
(13) The present invention provides the method of (11) or (12) above, wherein the raw material containing doping elements (Q) is mixed such that an amount of the doping elements (Q) is in a range of 500 ppm to 13,500 ppm based on a total weight of the composite transition metal hydroxide.
(14) The present invention provides the method of any one of (11) to (13) above, wherein the coating element (R)-containing raw material is at least one selected from oxide, carbonate, nitride, hydroxide, oxyhydroxide, and halide which include the coating element (R).
(15) The present invention provides the method of any one of (11) to (14) above, wherein the coating element (R)-containing raw material is mixed such that an amount of the coating element (R) is in a range of 300 ppm to 5,000 ppm based on a total weight of the lithium-rich manganese-based oxide.
(16) The present invention provides the method of any one of (11) to (15) above, wherein the heat treatment is performed at a temperature of 400°C to 700°C.
(17) The present invention provides a positive electrode including the positive electrode active material of any one of (1) to (10) above.
(18) The present invention provides a lithium secondary battery including the positive electrode of (17) above.

### ADVANTAGEOUS EFFECTS

Since a positive electrode active material of the present invention includes a lithium-rich manganese-based oxide including at least two doping elements (Q) selected from tungsten (W), aluminum (Al), cobalt (Co), zirconium (Zr), rhenium (Re), vanadium (V), chromium (Cr), iron (Fe), gallium (Ga), silicon (Si), boron (B), ruthenium (Ru), titanium (Ti), niobium (Nb), molybdenum (Mo), magnesium (Mg), sodium (Na), and platinum (Pt) while simultaneously including a Li₂MnO₃ phase and a LiM'O₂ (where M' is an element including at least one selected from nickel (Ni) and manganese (Mn)) phase; and a coating portion including a coating element (R) which is formed on the lithium-rich manganese-based oxide, wherein an oxidation number of the coating element (R) is lower than a sum of oxidation numbers of the doping elements (Q), the lithium-rich manganese-based oxide including the doping elements (Q) attracts electrons from the coating portion including the coating element (R), and thus, electron density of a surface of the coating portion is decreased. In addition, since the coating portion including the coating element (R) draws oxygen from the lithium-rich manganese-based oxide including the doping elements (Q), an oxidation number of manganese bonded with the oxygen is changed. Among them, since an oxidation number of Mn⁴⁺, which is structurally stable, but is in a redox-inactive state, decreases, the coating portion becomes an electrochemically active state. As a result, lithium storage capability in the lithium-rich manganese-based oxide is improved, and ionic conductivity of the positive electrode active material is improved due to the coating portion formed on the lithium-rich manganese-based oxide while movement of lithium ions is promoted because the coating portion does not interfere with an intercalation and deintercalation reaction of the lithium ions. Accordingly, there is an effect of improving capacity characteristics of a positive electrode and a secondary battery which include the positive electrode active material, and there is an effect of reducing costs.

Also, according to a method of preparing a positive electrode active material of the present invention, the above-described positive electrode active material may be effectively prepared.

### BRIEF DESCRIPTION OF THE DRAWINGS

FIG. 1 is X-ray diffraction (XRD) data of positive electrode active materials prepared in Examples 1 to 12.
FIG. 2 is XRD data of positive electrode active materials prepared in Comparative Examples 1 to 5.
FIG. 3 is an electron probe microanalyzer (EPMA) cobalt element mapping image of a cross section of a positive electrode including the positive electrode active material prepared in Example 1.

### BEST MODE FOR CARRYING OUT THE INVENTION

Hereinafter, the present invention will be described in more detail to allow for a clearer understanding of the present invention.

It will be understood that words or terms used in the specification and claims shall not be interpreted as the meaning defined in commonly used dictionaries. It will be further understood that the words or terms should be interpreted as having a meaning that is consistent with their meaning in the context of the relevant art and the technical idea of the invention, based on the principle that an inventor may properly define the meaning of the words or terms to best explain the invention.

It will be further understood that the terms "include," "comprise," or "have" in this specification specify the presence of stated features, numbers, steps, elements, or combinations thereof, but do not preclude the presence or addition of one or more other features, numbers, steps, elements, or combinations thereof.

In this specification, the term 'on' means not only a case in which one component is formed directly on an upper surface of another component, but also includes a case in which intervening components may also be present.

In this specification, an amount of each element in a lithium-rich manganese-based oxide may be measured through ICP (Inductive Coupled Plasma) analysis using an inductively coupled plasma optical emission spectrometer (ICP-OES; Optima 7300DV, PerkinElmer).

In this specification, an average particle diameter (D₅₀) may be defined as a particle diameter corresponding to 50% of volume cumulative distribution in a particle size distribution curve (graph curve of particle size distribution) of each particle. After dispersing measurement target powder in a dispersion medium, the dispersion medium is introduced into a commercial laser diffraction particle size measurement instrument (e.g., S3500 by Microtrac), a particle size distribution is calculated by measuring a difference in diffraction patterns due to a particle size when particles pass through a laser beam, and the D₅₀ may be measured by calculating a particle diameter at 50% of the volume cumulative distribution according to the particle diameter using the measurement instrument.

### Positive Electrode Active Material

Hereinafter, a positive electrode active material according to the present invention will be described.

The positive electrode active material according to the present invention includes a lithium-rich manganese-based oxide simultaneously including a Li₂MnO₃ phase and a LiM'O₂ (where M' is an element including at least one selected from nickel (Ni) and manganese (Mn)) phase; and a coating portion formed on the lithium-rich manganese-based oxide, wherein the lithium-rich manganese-based oxide includes at least two doping elements (Q) selected from tungsten (W), aluminum (Al), cobalt (Co), zirconium (Zr), rhenium (Re), vanadium (V), chromium (Cr), iron (Fe), gallium (Ga), silicon (Si), boron (B), ruthenium (Ru), titanium (Ti), niobium (Nb), molybdenum (Mo), magnesium (Mg), sodium (Na), and platinum (Pt), and the coating portion includes at least one coating element (R) selected from zinc (Zn), Al, Co, Ti, Nb, V, Mo, W, B, and Ni, and satisfies Equation 1 below. [Equation 1] 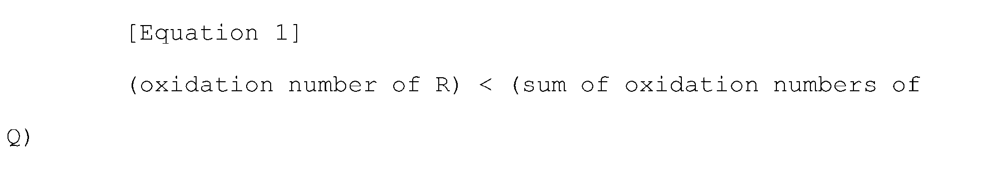 (oxidation number of R) < (sum of oxidation numbers of Q)

A lithium-rich oxide (Li-rich layered oxide), a type of the positive electrode active material, is a mixed phase in which a Li₂MnO₃ phase and a LiM'O₂ (where M' is an element including at least one selected from Ni, Mn, and Co) phase are mixed, wherein there is a problem in that large irreversible capacity loss occurs during a formation process and a structural change is large during charge and discharge cycles.

As a result of a significant amount of research conducted into solving this problem, the present inventors have found that, with respect to a positive electrode active material that uses a lithium-rich manganese-based oxide simultaneously including a Li₂MnO₃ phase and a LiM'O₂ (wherein M' is an element including at least one selected from Ni and Mn) phase, wherein the lithium-rich manganese-based oxide includes at least two doping elements (Q), and a coating portion including a coating element (R) is formed on the lithium-rich manganese-based oxide, wherein an oxidation number of R is lower than a sum of oxidation numbers of Q, since the coating portion including the coating element (R) draws oxygen from the lithium-rich manganese-based oxide including the doping elements (Q), an oxidation number of manganese in the lithium-rich manganese-based oxide is decreased. Specifically, manganese in the lithium-rich manganese-based oxide exists in the form of Mn²⁺/Mn⁴⁺. With respect to Mn⁴⁺, it plays a role in supporting a crystal lattice. Thus, there is no concern about structural changes such as Jahn-Teller distortions, and battery capacity may be maintained for a long time. However, there is a problem in that it has almost no electrochemical activity and very low electrical conductivity. With respect to Mn²⁺, it is electrochemically active, but is structurally unstable and has a problem of being dissolved. With respect to the positive electrode active material in which the oxidation number of R is lower than the sum of the oxidation numbers of Q, since the coating portion including the coating element (R) draws oxygen from the lithium-rich manganese-based oxide including the doping elements (Q), the oxidation number of manganese bonded with the oxygen is changed. Among them, since an oxidation number of Mn⁴⁺, which is structurally stable, but is in a redox-inactive state, decreases, the coating portion becomes an electrochemically active state. In addition, since the lithium-rich manganese-based oxide including the doping elements (Q) attracts electrons from the coating portion including the coating element (R), electron density of a surface of the coating portion is decreased, and thus, movement of lithium ions is promoted because the coating portion does not interfere with an intercalation and deintercalation reaction of the lithium ions. As a result, lithium storage capability in the lithium-rich manganese-based oxide is improved while ionic conductivity of the positive electrode active material is improved due to the coating portion formed on the lithium-rich manganese-based oxide. Also, even if the oxidation number of manganese decreases, a stable layered structure is maintained while manganese ion dissolution and structural deformation do not occur, and charge and discharge cycles may be performed. Thus, the inventors have found that electrical conductivity of the positive electrode active material may be improved and capacity characteristics of the secondary battery may be improved, thereby leading to the completion of the present invention.

Q includes doping elements, wherein Q includes at least two selected from W, Al, Co, Zr, Re, V, Cr, Fe, Ga, Si, B, Ru, Ti, Nb, Mo, Mg, Na, and Pt. The doping element is an element having a mole fraction of 0.1 or less among metallic elements excluding lithium in the lithium-rich manganese-based oxide, and means an element that exists uniformly throughout a positive electrode active material particle. In a case in which the lithium-rich manganese-based oxide includes the doping elements (Q), the doping elements chemically bond with other elements in the lithium-rich manganese-based oxide to form a conductive path, and have an effect of improving electrical conductivity. Specifically, the doping elements include a first doping element (Q1) and a second doping element (Q2). Since the doping elements include the first doping element (Q1) and the second doping element (Q2), there is an effect of increasing mobility of lithium ions and enhancing oxygen stability. In addition, since the doping elements include the first doping element (Q1) and the second doping element (Q2) which have different crystal sizes, there is an effect of reducing an irreversible change in crystal structure during charge and discharge.

In a case in which the doping element is one type or the doping element is not included, since structural stability is poor, there is a problem in that the irreversible change in crystal structure occurs during charge and discharge.

R is a coating element, wherein it is at least one selected from Zn, Al, Co, Ti, Nb, V, Mo, W, B, and Ni. The coating element means an element that is concentrated in an outermost portion of the positive electrode active material particle. Specifically, the coating element means an element having a mole fraction of 0.5 or more at a depth of 0.5 nm from the outermost portion of the positive electrode active material toward the center.

In a case in which the coating portion includes the coating element (R), the coating element (R) may improve capacity retention and life characteristics by protecting particle surface and improving stability, and since the particle surface is coated with a material with good conductivity to improve the electrical conductivity, a charge and discharge reaction and output characteristics may be improved.

The oxidation number of R is lower than the sum of the oxidation numbers of Q. Specifically, the oxidation number of R is lower than the sum of the oxidation number of the first doping element (Q1) and the oxidation number of the second doping element (Q2).

In a case in which there are two or more types of R, the sum of the oxidation numbers of R is lower than the sum of the oxidation numbers of Q. Specifically, the sum of the oxidation numbers of Q is greater than the sum of oxidation numbers of a first coating element (R1) and a second coating element (R2). In a case in which the oxidation number of R is greater than or equal to the sum of the oxidation numbers of Q, since the oxygen is drawn toward the lithium-rich manganese-based oxide including Q, the oxidation number of manganese in the lithium-rich manganese-based oxide is increased. As a result, the existing Mn⁴⁺ still exists in an electrochemically inactive state, and the coating portion formed on the lithium-rich manganese-based oxide interferes with the intercalation and deintercalation reaction of the lithium ions to reduce the mobility of the lithium ions. Thus, there is a problem in that capacity and life characteristics of the positive electrode active material are degraded.

According to an embodiment of the present invention, the lithium-rich manganese-based oxide may have a composition represented by Formula 1 or Formula 2 below.

[Formula 1] Li₁₊ₓMnₐ₁Ni_{b1}Q_{c1}O₂

In Formula 1,
Q includes at least two selected from W, Al, Co, Zr, Re, V, Cr, Fe, Ga, Si, B, Ru, Ti, Nb, Mo, Mg, Na, and Pt, and
0.000<x≤0.200, 0.500≤a1<1.000, 0.200≤b1<0.500, and 0.0000<c1≤0.0300, and

   [Formula 2] αLi₂Mn_{1-c2}Q_{c2}O₃·βLi(Mnₐ₂Ni_{b2}Q_{c3})O₂

In Formula 2,
Q includes at least two selected from W, Al, Co, Zr, Re, V, Cr, Fe, Ga, Si, B, Ru, Ti, Nb, Mo, Mg, Na, and Pt, and
0<α<1, 0<β<1, 0.0000≤c2≤0.0100, 0.000<a2≤0.500, 0.000<b2≤0.500 0.0000≤c3≤0.0100, a2+b2+c3=1.000, and c2+c3>0.0000.

Q includes doping elements, wherein Q may be at least two selected from W, Al, Co, Zr, Re, V, Cr, Fe, Ga, Si, B, Ru, Ti, Nb, Mo, Mg, Na, and Pt. Specifically, Q may include a first doping element (Q1) and a second doping element (Q2).

x may be greater than 0.000, 0.130 or more, 0.131 or more, or 0.132 or more, and may be 0.139 or less, 0.150 or less, 0.160 or less, 0.170 or less, 0.180 or less, 0.190 or less, or 0.200 or less. When x satisfies the above range, since the Li₂MnO₃ phase and the LiM'O₂ phase are formed in an appropriate ratio, high-capacity characteristics may be achieved.

a1 may be 0.500 or more, or 0.550 or more, and may be 0.600 or less, 0.700 or less, 0.800 or less, 0.900 or less, or less than 1.000. Since high energy density is exhibited when b1 satisfies the above range, the high-capacity characteristics may be achieved. Particularly, in a case in which a1 is in a range of 0.550 to 0.600, since the Li₂MnO₃ phase and the LiM'O₂ phase are formed in an appropriate ratio, the high-capacity characteristics may be achieved.

b1 may be 0.200 or more, 0.250 or more, or 0.290 or more, and may be 0.300 or less, 0.350 or less, 0.400 or less, or less than 0.500. Since the high energy density is exhibited when b1 satisfies the above range, the high-capacity characteristics may be achieved.

c1 may be greater than 0.0000, or 0.0050 or more, and may be 0.0160 or less, 0.0180 or less, 0.0200 or less, or 0.0300 or less. When c1 satisfies the above range, stability of the crystal structure of the positive electrode active material may be improved and a particle shape may be improved. Also, when combined with a specific coating element, capacity characteristics of the secondary battery may be improved by improving lithium mobility.

α means a molar ratio of the Li₂MnO₃ phase in the lithium-rich manganese-based oxide, wherein it may be greater than 0, 0.2 or more, or 0.4 or more, and may be 0.6 or less, 0.8 or less, or less than 1. Since high energy density per unit volume may be exhibited when α satisfies the above range, the high-capacity characteristics may be achieved. Also, the capacity characteristics of the battery including the positive electrode active material may be further improved.

c2 may be 0.0000 or more, 0.0020 or more, 0.0040 or more, or 0.0060 or more, and may be 0.0080 or less, 0.0090 or less, or 0.0100 or less. When c2 satisfies the above range, the stability of the crystal structure of the positive electrode active material may be improved and the particle shape may be improved. Also, when combined with the specific coating element, the capacity characteristics of the secondary battery may be improved by improving the lithium mobility.

β means a molar ratio of the LiM'O₂ phase in the lithium-rich manganese-based oxide, wherein it may be greater than 0, 0.2 or more, or 0.4 or more, and may be 0.6 or less, 0.8 or less, or less than 1. Since the high energy density per unit volume may be exhibited when β satisfies the above range, the high-capacity characteristics may be achieved. Also, the capacity characteristics of the battery including the positive electrode active material may be further improved.

a2 may be greater than 0.000, 0.100 or more, 0.200 or more, or 0.300 or more, and may be 0.400 or less, or 0.500 or less. Since the high energy density is exhibited when a2 satisfies the above range, the high-capacity characteristics may be achieved.

b2 may be 0.000 or more, 0.100 or more, 0.200 or more, or 0.300 or more, and may be 0.400 or less, or 0.500 or less. Since the high energy density is exhibited when b2 satisfies the above range, the high-capacity characteristics may be achieved.

c3 may be 0.0000 or more, 0.0020 or more, 0.0040 or more, or 0.0060 or more, and may be 0.0080 or less, or 0.0100 or less. When c3 satisfies the above range, the stability of the crystal structure of the positive electrode active material may be improved and the particle shape may be improved. Also, when combined with the specific coating element, the capacity characteristics of the secondary battery may be improved by improving the lithium mobility.

In Formula 2, a2, b2, and c3 may satisfy the relation a2+b2+c3=1.000, and c2 and c3 may satisfy the relation c2+c3>0.0000.

The lithium-rich manganese-based oxide may include cobalt (Co) as the doping elements (Q). In this case, the cobalt (Co) may be included in a trace amount in the lithium-rich manganese-based oxide.

According to an embodiment of the present invention, an amount of the doping elements (Q) may be in a range of 500 ppm to 13,000 ppm based on a total weight of the lithium-rich manganese-based oxide. Specifically, the amount of Q may be 500 ppm or more, 700 ppm or more, or 3,000 ppm or more, and may be 9,000 ppm or less, 10,000 ppm or less, 11,000 ppm or less, 12,000 ppm or less, or 13,000 ppm or less based on the total weight of the lithium-rich manganese-based oxide. In a case in which the amount of Q is within the above range, since the stability of the crystal structure of the positive electrode active material and the electrical conductivity are improved, the capacity characteristics may be improved.

According to an embodiment of the present invention, a type of the coating portion may be a film type, an island type, or a combination thereof. The film type may be a continuous type, and the island type may be a discontinuous type. If the coating portion satisfies the above type, since the mobility of the lithium ions may be improved, the capacity characteristics may be improved.

According to an embodiment of the present invention, the coating portion may include at least one selected from R, an R-O compound, a Li-R-O compound, and a Li-M'-R-O compound. Specifically, in a case in which a component of the coating portion is R, since stability is high due to a simple chemical composition of the coating portion and a rate at which lithium ions pass through the coating portion is increased due to high electrical conductivity, capacity characteristics and output characteristics of the secondary battery including the positive electrode active material may be improved.

According to an embodiment of the present invention, an amount of the coating portion may be in a range of 0.05 part by weight to 0.3 part by weight based on 100 parts by weight of the lithium-rich manganese-based oxide. Specifically, the amount of the coating portion may be 0.05 part by weight or more, 0.06 part by weight or more, 0.07 part by weight or more, 0.08 part by weight or more, 0.09 part by weight or more, 0.1 part by weight or more, 0.11 part by weight or more, 0.12 part by weight or more, 0.13 part by weight or more, 0.14 part by weight or more, 0.15 part by weight or more, 0.16 part by weight or more, 0.17 part by weight or more, 0.18 part by weight or more, 0.19 part by weight or more, or 0.2 part by weight or more, and may be 0.21 part by weight or less, 0.22 part by weight or less, 0.23 part by weight or less, 0.24 part by weight or less, 0.25 part by weight or less, 0.26 part by weight or less, 0.27 part by weight or less, 0.28 part by weight or less, 0.29 part by weight or less, or 0.3 part by weight or less based on 100 parts by weight of the lithium-rich manganese-based oxide. In a case in which the amount of the coating portion is within the above range, since the structural stability of the positive electrode active material and the electrical conductivity are improved while the coating portion does not act as a resistor, the capacity characteristics may be improved.

According to an embodiment of the present invention, an amount of the coating element (R) included in the coating portion may be in a range of 300 ppm to 4,000 ppm based on the total weight of the lithium-rich manganese-based oxide. Specifically, the amount of R included in the coating portion may be 300 ppm or more, 500 ppm or more, 750 ppm or more, 1,000 ppm or more, or 2,000 ppm or more, and may be 3,000 ppm or less, or 4,000 ppm or less based on the total weight of the lithium-rich manganese-based oxide. In a case in which the amount of R is within the above range, since the structural stability of the positive electrode active material and the electrical conductivity are improved while the coating element does not act as a resistor, the capacity characteristics may be improved.

According to an embodiment of the present invention, the oxidation numbers of Q may be in a range of 3 to 6. Specifically, the oxidation number of Q1 may be 6, and the oxidation number of Q2 may be in a range of 3 to 6. In a case in which the oxidation numbers of Q are within the above range, since an appropriate amount of charge capable of moving the lithium ions in the lithium-rich manganese-based oxide exists, the capacity characteristics may be improved and it may be advantageous to combine the coating element (R) having the oxidation number lower than the sum of the oxidation numbers of Q.

According to an embodiment of the present invention, Q may include at least two selected from W, Al, Zr, Ti, Mo, and Co, and R may include at least one selected from Zn, Al, Co, Ti, Nb, V, Mo, and W. Specifically, Q may include at least two selected from W, Al, Zr, Ti, Mo, and Co, and R may include Co. In this case, since the oxidation number of R is lower than the sum of the oxidation numbers of Q, the coating portion including the coating element (R) draws oxygen from the lithium-rich manganese-based oxide including the doping elements (Q), and thus, oxygen density of the lithium-rich manganese-based oxide is decreased. As a result, since the coating portion does not interfere with the intercalation and deintercalation reaction of the lithium ions while the ionic conductivity is improved due to the coating portion formed on the lithium-rich manganese-based oxide, the movement of the lithium ions is promoted. Thus, the electrical conductivity may be improved and the capacity characteristics of the secondary battery may be improved.

According to an embodiment of the present invention, the positive electrode active material may have an average particle diameter (D₅₀) of 4 µm to 12 µm. Specifically, the positive electrode active material may have an average particle diameter (D₅₀) of 4 µm or more, 5 µm or more, 6 µm or more, 7 µm or more, 8 µm or more, or 9 µm or more, and may have an average particle diameter (D₅₀) of 10 µm or less, 11 µm or less, or 12 µm or less. In a case in which the average particle diameter (D₅₀) is within the above range, excellent electrode density may be achieved, and the structural stability may be improved.

### Method of Preparing Positive Electrode Active Material

Next, a method of preparing a positive electrode active material of the present invention will be described. The method of preparing a positive electrode active material of the present invention is a method of preparing the positive electrode active material according to the present invention.

The method of preparing a positive electrode active material according to the present invention includes the steps of: (A) mixing a composite transition metal hydroxide, a lithium (Li)-containing raw material, and a raw material containing doping elements (Q) to prepare a mixture; (B) sintering the mixture to prepare a lithium-rich manganese-based oxide; and (C) mixing the lithium-rich manganese-based oxide with a coating element (R)-containing raw material and performing a heat treatment to form a coating portion, wherein the sintering is performed at a temperature of 800°C to 1,000°C in an air atmosphere, the doping elements (Q) are at least two selected from W, Al, Co, Zr, Re, V, Cr, Fe, Ga, Si, B, Ru, Ti, Nb, Mo, Mg, Na, and Pt, the coating element (R) is at least one selected from Zn, Al, Co, Ti, Nb, V, Mo, W, B, and Ni, and the doping elements (Q) and the coating element (R) may satisfy Equation 1 below. [Equation 1] 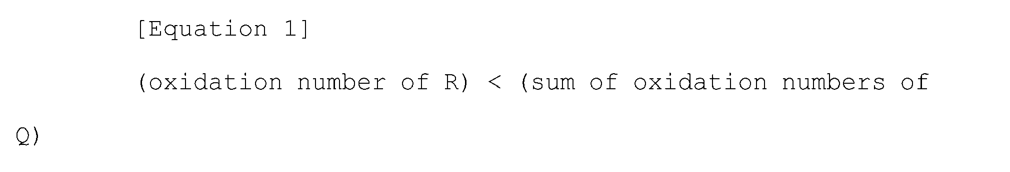 (oxidation number of R) < (sum of oxidation numbers of Q)

The above-described positive electrode active material according to the present invention may be prepared by appropriately controlling types of raw materials, a mixing ratio of the raw materials, or sintering and heat treatment times.

Hereinafter, each step of the present invention will be described in detail.

### Step (A)

The method of preparing a positive electrode active material includes step (A) of mixing a composite transition metal hydroxide, a lithium (Li)-containing raw material, and a raw material containing doping elements (Q) to prepare a mixture.

The composite transition metal hydroxide may be prepared by a co-precipitation reaction while adding a composite transition metal aqueous solution, an ammonium cationic complexing agent, and a basic compound to a reactor.

The composite transition metal aqueous solution may be prepared by dissolving transition metal-containing raw materials in a solvent such as water, and, for example, may be prepared by dissolving a nickel (Ni)-containing raw material and a manganese (Mn)-containing raw material in water. Also, if necessary, the composite transition metal aqueous solution may further include a metal-containing raw material comprisin g other transition metal.

The nickel (Ni)-containing raw material may be at least one selected from the group consisting of NiSO₄, NiO, Ni(OH)₂, NiO·OH, NiCO₃·2Ni(OH)₂·4H₂O, NiC₂O₄·2H₂O, Ni(NO₃)₂·6H₂O, fatty acid nickel, and nickel halide, and any one thereof or a mixture of two or more thereof may be used. When considering a strong base used to control pH during the co-precipitation reaction, specifically, NiSO₄ may be used.

The manganese (Mn)-containing raw material may be at least one selected from the group consisting of MnSO₄, MnCO₃, Mn₂O₃, MnO₂, Mn₃O₄, Mn(NO₃)₂, manganese acetate, manganese dicarboxylate, manganese citrate, manganese salt of fatty acid, manganese oxyhydroxide, and halide of manganese e.g. chloride, and any one thereof or a mixture of two or more thereof may be used. When considering the strong base used to control the pH during the co-precipitation reaction, specifically, MnSO₄ may be used.

The metal-containing raw material comprising other tr ansition metal includes at least one of transition metals excluding nickel (Ni) and manganese (Mn), and may be at least one selected from the group consisting of carbonate, nitrate, hydroxide, oxide, and halide, and any one thereof or a mixture of two or more thereof may be used.

The nickel (Ni)-containing raw material and the manganese (Mn)-containing raw material may be used in appropriate amounts in consideration of an amount of each metallic element in the prepared composite transition metal hydroxide.

The ammonium cationic complexing agent may include at least one compound selected from the group consisting of NH₄OH, (NH₄)₂SO₄, NH₄NO₃, NH₄Cl, CH₃COONH₄, and NH₄CO₃, and may be added into the reactor in the form of a solution in which the above compound is dissolved in a solvent. In this case, water or a mixture of water and an organic solvent (specifically, alcohol etc.), which may be uniformly mixed with the water, may be used as the solvent.

The basic compound may be at least one compound selected from the group consisting of NaOH, KOH, and Ca(OH)₂, and may be added into the reactor in the form of a solution in which the above compound is dissolved in a solvent. In this case, water or a mixture of water and an organic solvent (specifically, alcohol etc.), which may be uniformly mixed with the water, may be used as the solvent.

If the composite transition metal aqueous solution, the ammonium cationic complexing agent, and the basic compound are added to the reactor as described above, precursor particles in the form of a composite transition metal hydroxide are formed due to the co-precipitation reaction between transition metal ions in the composite transition metal aqueous solution and hydroxide ions of the basic compound.

The co-precipitation reaction may be performed for 60 hours to 80 hours. In a case in which the co-precipitation reaction is performed for a time within the above range, crystallinity of the precursor particles may be controlled to a sufficient degree.

In this case, the basic compound may be added in an amount such that pH of a reaction solution is in a desired range.

If the precursor particles are formed by the above-described method, a composite transition metal hydroxide is obtained by separating the particles from the reaction solution. Specifically, after separating the particles from the reaction solution by filtering the reaction solution, the separated particles may be washed and dried to obtain a composite transition metal hydroxide. In this case, a process, such as grinding and/or classification, may be performed, if necessary.

The composite transition metal hydroxide may have a composition represented by Mnₐ₄Ni_{b4}Q¹_{c4}(OH)₂ (wherein Q¹ includes at least two selected from W, Al, Co, Zr, Re, V, Cr, Fe, Ga, Si, B, Ru, Ti, Nb, Mo, Mg, Na, and Pt, and a4, b4, and c4 satisfy 0.500≤a4<1.000, 0.200≤b4<0.500, and 0.0000≤c4≤ 0.0300.). Also, the composite transition metal hydroxide may not include cobalt (Co). In this case, there is a cost-saving effect and performance of the lithium secondary battery may be improved without including the cobalt in the composite transition metal hydroxide.

The lithium (Li)-containing raw material may be at least one selected from the group consisting of LiOH, Li₂CO₃, LiNO₃, LiNO₂, LiOH·H₂O, LiH, LiF, LiCl, LiBr, LiI, CH₃COOLi, Li₂O, Li acetate, Li dicarboxylic acid, Li citrate, Li fatty acid, alkyl lithium, and lithium halide, and any one thereof or a mixture of two or more thereof may be used. Specifically, LiOH may be used in consideration of sintering at a high temperature of about 800°C to about 1,000°C.

According to the present invention, the doping elements (Q) are at least two selected from W, Al, Co, Zr, Re, V, Cr, Fe, Ga, Si, B, Ru, Ti, Nb, Mo, Mg, Na, and Pt.

According to an embodiment of the present invention, at least one selected from oxide, carbonate, nitride, hydroxide, oxyhydroxide, and halide which include the doping elements (Q) may be used as the raw material containing doping elements (Q). In consideration of economic efficiency, processability, and accessibility, a raw material containing doping elements (Q) in the form of an oxide or hydroxide may specifically be used.

The mixing may be performed by dry mixing or wet mixing. In a case in which each of components is mixed through the dry mixing, a sintering process may be performed without a separate drying process. In a case in which each of the components is mixed through the wet mixing, each component may be added to a solvent, specifically, water or a mixture of water and an organic solvent (specifically alcohol etc.) that may be uniformly mixed with the water, or after a solution containing each raw material, specifically, an aqueous solution is prepared, the components mixed by mixing these solutions are spray-dried and then subjected to a sintering process. Each raw material and composite transition metal hydroxide may be used in appropriate amounts in consideration of the amount of each metallic element in the finally-prepared lithium-rich manganese-based oxide.

According to an embodiment of the present invention, in step (A), the composite transition metal hydroxide including nickel and manganese but not including cobalt, the lithium (Li)-containing raw material, and the raw material containing doping elements (Q) may be mixed in amounts to have the composition represented by Formula 1 or 2.

According to an embodiment of the present invention, the raw material containing doping elements (Q) may be mixed such that the amount of the doping elements (Q) is 500 ppm or more, 750 ppm or more, or 3,000 ppm or more, and is 3,300 ppm or less, 10,000 ppm or less, or 13,500 ppm or less based on a total weight of the composite transition metal hydroxide. In a case in which the mixing amount of the raw material containing doping elements (Q) is within the above range, since the stability of the crystal structure of the positive electrode active material and the electrical conductivity are improved, the capacity characteristics may be improved.

### Step (B)

The method of preparing a positive electrode active material according to the present invention includes step (B) of sintering the mixture to prepare a lithium-rich manganese-based oxide, after step (A).

The sintering is performed in an air atmosphere. In this case, it is easy to maintain a sintering atmosphere and is advantageous in terms of economic efficiency. With respect to an oxidizing atmosphere, since formation of manganese oxide is promoted, there are problems with capacity and life characteristics of the secondary battery, and with respect to an inert atmosphere, there is a problem in that oxygen necessary for a reaction does not exist.

According to the present invention, the sintering is performed at a temperature of 800°C to 1,000°C. Specifically, the sintering may be performed at a temperature of 800°C or higher, 850°C or higher, or 900°C or higher, and 950°C or less, or 1,000°C or less. In a case in which the sintering temperature is within the above range, the Li₂MnO₃ phase and the LiM'O₂ phase may be formed in an appropriate ratio. In a case in which the sintering is performed at a temperature of less than 800°C, since crystallization does not occur properly, manganese particles are non-uniformly distributed. Thus, there is a problem with the capacity and life characteristics due to a reduction in electrical conductivity, and in a case in which the sintering is performed at a temperature of greater than 1,000°C, a size of the particle increases due to oversintering and a binding force between the particles is decreased to reduce the structural stability.

According to an embodiment of the present invention, the sintering may be performed for 7 hours to 10 hours. In a case in which the sintering time is within the above range, since crystallinity of the lithium-rich manganese-based oxide particles is sufficiently controlled, it is advantageous for lithium ion transport.

### Step (C)

The method of preparing a positive electrode active material according to the present invention includes step (C) that includes a step of mixing the lithium-rich manganese-based oxide with a coating element (R)-containing raw material and performing a heat treatment to form a coating portion, after step (B).

According to the present invention, the coating element (R) is at least one selected from Zn, Al, Co, Ti, Nb, V, Mo, W, B, and Ni.

According to an embodiment of the present invention, at least one selected from oxide, carbonate, nitride, hydroxide, oxyhydroxide, and halide may be used as the coating element (R)-containing raw material. In consideration of accessibility and processability, at least one selected from ZnO, Al(OH)₃, Co₂O₃, TiO₂, Nb₂O₅, V₂O₅, MoO₂, WO₃, and H₃BO₃ may be used.

According to the present invention, the doping elements (Q) and the coating element (R) satisfy Equation 1 described in this specification. In this case, since the structural stability and the electrical conductivity are improved, a positive electrode active material with improved capacity characteristics may be prepared.

According to an embodiment of the present invention, the coating element (R)-containing raw material may be mixed such that the amount of the coating element (R) is 300 ppm or more, 500 ppm or more, 750 ppm or more, or 1,000 ppm or more, and is 1,200 ppm or less, 3,000 ppm or less, or 5,000 ppm or less based on the total weight of the lithium-rich manganese-based oxide. In a case in which the mixing amount of the coating element (R)-containing raw material is within the above range, since the structural stability of the positive electrode active material and the electrical conductivity are improved while the coating element (R)-containing raw material does not act as a resistor, the capacity characteristics may be improved.

According to an embodiment of the present invention, the heat treatment may be performed in an air atmosphere, an oxygen atmosphere, or an inert atmosphere, and the heat treatment may be performed at a temperature of 400°C to 700°C. Specifically, the heat treatment may be performed at a temperature of 400°C or higher, or 500°C or higher, and 600°C or less, or 700°C or less. In a case in which the heat treatment temperature is within the above range, sufficient heat energy required for coating may be supplied. In a case in which the lithium-rich manganese-based oxide and the coating (R)-containing raw material are mixed and then heat-treated within the above temperature range, a coating portion including the coating element (R) may be formed on the lithium-rich manganese-based oxide. The coating portion including the coating element (R) may be in the form of partially covering (discontinuously) at least a portion of the lithium-rich manganese-based oxide, i.e., a region of the lithium-rich manganese-based oxide, or covering (continuously) the entire region. A type of the coating portion may be a film type, an island type, or a combination thereof.

### Positive Electrode

Next, a positive electrode according to the present invention will be described.

The positive electrode according to the present invention includes a positive electrode active material layer including the positive electrode active material according to the present invention. Specifically, the positive electrode includes a positive electrode collector and a positive electrode active material layer formed on the positive electrode collector and including the positive electrode active material. Since the positive electrode active material has been described above, detailed descriptions thereof will be omitted and the remaining configurations will be only described in detail below.

The positive electrode collector is not particularly limited as long as it has conductivity without causing adverse chemical changes in the battery, and, for example, stainless steel, aluminum, nickel, titanium, fired carbon, or aluminum or stainless steel that is surface-treated with one of carbon, nickel, titanium, silver, or the like may be used. Also, the positive electrode collector may typically have a thickness of 3 µm to 500 µm, and microscopic irregularities may be formed on the surface of the collector to improve the adhesion of the positive electrode active material. The positive electrode collector, for example, may be used in various shapes such as that of a film, a sheet, a foil, a net, a porous body, a foam body, a non-woven fabric body, and the like.

The positive electrode active material layer may include a conductive agent and a binder in addition to the positive electrode active material. In this case, the positive electrode active material may be included in an amount of 80 wt% to 99 wt%, more specifically, 85 wt% to 98.5 wt% based on a total weight of the positive electrode active material layer, and excellent capacity characteristics may be obtained within this range.

The conductive agent is used to provide conductivity to the electrode, wherein any conductive agent may be used without particular limitation as long as it has suitable electron conductivity without causing adverse chemical changes in the battery. Specific examples of the conductive agent may be graphite such as natural graphite or artificial graphite; carbon based materials such as carbon black, acetylene black, Ketjen black, channel black, furnace black, lamp black, thermal black, and carbon fibers; powder or fibers of metal such as copper, nickel, aluminum, and silver; conductive whiskers such as zinc oxide whiskers and potassium titanate whiskers; conductive metal oxides such as titanium oxide; or conductive polymers such as polyphenylene derivatives, and any one thereof or a mixture of two or more thereof may be used. The conductive agent may be included in an amount of 0.1 wt% to 15 wt% based on the total weight of the positive electrode active material layer.

The binder improves adhesion between the positive electrode active material particles and adhesion between the positive electrode active material and the current collector. Specific examples of the binder may be polyvinylidene fluoride (PVDF), polyvinylidene fluoride-hexafluoropropylene copolymer (PVDF-co-HFP), polyvinyl alcohol, polyacrylonitrile, carboxymethyl cellulose (CMC), starch, hydroxypropyl cellulose, regenerated cellulose, polyvinylpyrrolidone, tetrafluoroethylene, polyethylene, polypropylene, an ethylenepropylene-diene polymer (EPDM), a sulfonated-EPDM, a styrenebutadiene rubber (SBR), a fluorine rubber, or various copolymers thereof, and any one thereof or a mixture of two or more thereof may be used. The binder may be included in an amount of 0.1 wt% to 15 wt% based on the total weight of the positive electrode active material layer.

The positive electrode may be prepared according to a typical method of preparing a positive electrode except that the above-described positive electrode active material is used. Specifically, a composition for forming a positive electrode active material layer, which is prepared by dissolving or dispersing the above-described positive electrode active material as well as optionally the binder and the conductive agent in a solvent, is applied onto the positive electrode collector, and the positive electrode may then be prepared by drying and rolling the coated positive electrode collector. In this case, types and amounts of the positive electrode active material, the binder, and the conductive agent are the same as those previously described. Also, as another method, the positive electrode may be prepared by casting the composition for forming a positive electrode active material layer on a separate support and then laminating a film separated from the support on the positive electrode collector.

The solvent may be a solvent normally used in the art. The solvent may include dimethyl sulfoxide (DMSO), isopropyl alcohol, N-methylpyrrolidone (NMP), acetone, or water, and any one thereof or a mixture of two or more thereof may be used. An amount of the solvent used may be sufficient if the solvent may dissolve or disperse the positive electrode active material, the conductive agent, and the binder in consideration of a coating thickness of a slurry and manufacturing yield, and may allow to have a viscosity that may provide excellent thickness uniformity during the subsequent coating for the preparation of the positive electrode.

### Lithium Secondary Battery

Next, a lithium secondary battery according to the present invention will be described.

The present invention may prepare an electrochemical device including the positive electrode. The electrochemical device may specifically be a battery or a capacitor, and may more specifically be a lithium secondary battery.

The lithium secondary battery specifically includes a positive electrode, a negative electrode disposed to face the positive electrode, a separator disposed between the positive electrode and the negative electrode, and an electrolyte, and, since the positive electrode is the same as described above, detailed descriptions thereof will be omitted and the remaining configurations will be only described in detail below.

Also, the lithium secondary battery may further optionally include a battery container accommodating an electrode assembly of the positive electrode, the negative electrode, and the separator, and a sealing member sealing the battery container.

In the lithium secondary battery, the negative electrode includes a negative electrode collector and a negative electrode active material layer disposed on the negative electrode collector.

The negative electrode collector is not particularly limited as long as it has high conductivity without causing adverse chemical changes in the battery, and, for example, copper, stainless steel, aluminum, nickel, titanium, fired carbon, copper or stainless steel that is surface-treated with one of carbon, nickel, titanium, silver, or the like, and an aluminum-cadmium alloy may be used. Also, the negative electrode collector may typically have a thickness of 3 µm to 500 µm, and, similar to the positive electrode collector, microscopic irregularities may be formed on the surface of the collector to improve the adhesion of a negative electrode active material. The negative electrode collector, for example, may be used in various shapes such as that of a film, a sheet, a foil, a net, a porous body, a foam body, a non-woven fabric body, and the like.

The negative electrode active material layer optionally includes a binder and a conductive agent in addition to the negative electrode active material.

A compound capable of reversibly intercalating and deintercalating lithium may be used as the negative electrode active material. Specific examples of the negative electrode active material may be a carbonaceous material such as artificial graphite, natural graphite, graphitized carbon fibers, and amorphous carbon; a metallic compound alloyable with lithium such as silicon (Si), aluminum (Al), tin (Sn), lead (Pb), zinc (Zn), bismuth (Bi), indium (In), magnesium (Mg), gallium (Ga), cadmium (Cd), a Si alloy, a Sn alloy, or an Al alloy; a metal oxide which may be doped and undoped with lithium such as SiO_{β}(0<β<2), SnO₂, vanadium oxide, and lithium vanadium oxide; or a composite including the metallic compound and the carbonaceous material such as a Si-C composite or a Sn-C composite, and any one thereof or a mixture of two or more thereof may be used. Also, a metallic lithium thin film may be used as the negative electrode active material. Furthermore, both low crystalline carbon and high crystalline carbon may be used as the carbon material. Typical examples of the low crystalline carbon may be soft carbon and hard carbon, and typical examples of the high crystalline carbon may be irregular, planar, flaky, spherical, or fibrous natural graphite or artificial graphite, Kish graphite, pyrolytic carbon, mesophase pitch-based carbon fibers, meso-carbon microbeads, mesophase pitches, and high-temperature sintered carbon such as petroleum or coal tar pitch derived cokes.

The negative electrode active material may be included in an amount of 80 wt% to 99 wt% based on a total weight of the negative electrode active material layer.

The binder is a component that assists in binding between the conductive agent, the active material, and the current collector, wherein the binder is typically added in an amount of 0.1 wt% to 10 wt% based on the total weight of the negative electrode active material layer. Examples of the binder may be polyvinylidene fluoride (PVDF), polyvinyl alcohol, carboxymethyl cellulose (CMC), starch, hydroxypropyl cellulose, regenerated cellulose, polyvinylpyrrolidone, tetrafluoroethylene, polyethylene, polypropylene, an ethylenepropylene-diene polymer (EPDM), a sulfonated-EPDM, a styrenebutadiene rubber, a nitrile-butadiene rubber, a fluorine rubber, and various copolymers thereof.

The conductive agent is a component for further improving conductivity of the negative electrode active material, wherein the conductive agent may be included in an amount of 10 wt% or less, specifically, 5 wt% or less based on the total weight of the negative electrode active material layer. The conductive agent is not particularly limited as long as it has conductivity without causing chemical changes in the battery, and, for example, a conductive material, such as: graphite such as natural graphite or artificial graphite; carbon black such as acetylene black, Ketjen black, channel black, furnace black, lamp black, and thermal black; conductive fibers such as carbon fibers or metal fibers; fluorocarbon; metal powder such as aluminum powder and nickel powder; conductive whiskers such as zinc oxide whiskers and potassium titanate whiskers; conductive metal oxide such as titanium oxide; or polyphenylene derivatives, may be used.

The negative electrode active material layer may be prepared by coating a composition for forming a negative electrode active material layer, which is prepared by dissolving or dispersing optionally the binder and the conductive agent as well as the negative electrode active material in a solvent, on the negative electrode collector and drying the coated negative electrode collector, or may be prepared by casting the composition for forming a negative electrode active material layer on a separate support and then laminating a film separated from the support on the negative electrode collector.

In the lithium secondary battery, the separator separates the negative electrode and the positive electrode and provides a movement path of lithium ions, wherein any separator may be used as the separator without particular limitation as long as it is typically used in a lithium secondary battery, and particularly, a separator having high moisture-retention ability for an electrolyte as well as low resistance to the transfer of electrolyte ions may be used. Specifically, a porous polymer film, for example, a porous polymer film prepared from a polyolefin-based polymer, such as an ethylene homopolymer, a propylene homopolymer, an ethylene/butene copolymer, an ethylene/hexene copolymer, and an ethylene/methacrylate copolymer, or a laminated structure having two or more layers thereof may be used. Also, a typical porous nonwoven fabric, for example, a nonwoven fabric formed of high melting point glass fibers or polyethylene terephthalate fibers may be used. Furthermore, a coated separator including a ceramic component or a polymer material may be used to secure heat resistance or mechanical strength, and the separator having a single layer or multilayer structure may be optionally used.

Also, the electrolyte used in the present invention may include an organic liquid electrolyte, an inorganic liquid electrolyte, a solid polymer electrolyte, a gel-type polymer electrolyte, a solid inorganic electrolyte, or a molten-type inorganic electrolyte which may be used in the preparation of the lithium secondary battery, but the present invention is not limited thereto.

Specifically, the electrolyte may include an organic solvent and a lithium salt.

Any organic solvent may be used as the organic solvent without particular limitation so long as it may function as a medium through which ions involved in an electrochemical reaction of the battery may move. Specifically, an ester-based solvent such as methyl acetate, ethyl acetate, γ-butyrolactone, and ε-caprolactone; an ether-based solvent such as dibutyl ether or tetrahydrofuran; a ketone-based solvent such as cyclohexanone; an aromatic hydrocarbon-based solvent such as benzene and fluorobenzene; or a carbonate-based solvent such as dimethyl carbonate (DMC), diethyl carbonate (DEC), ethylmethyl carbonate (EMC), ethylene carbonate (EC), and propylene carbonate (PC); an alcohol-based solvent such as ethyl alcohol and isopropyl alcohol; nitriles such as R-CN (where R is a linear, branched, or cyclic C2-C20 hydrocarbon group and may include a double-bond aromatic ring or ether bond); amides such as dimethylformamide; dioxolanes such as 1,3-dioxolane; or sulfolanes may be used as the organic solvent. Among these solvents, the carbonate-based solvent is preferable, and a mixture of a cyclic carbonate (e.g., ethylene carbonate or propylene carbonate) having high ionic conductivity and high dielectric constant, which may increase charge/discharge performance of the battery, and a low-viscosity linear carbonate-based compound (e.g., ethylmethyl carbonate, dimethyl carbonate, or diethyl carbonate) is more preferable. In this case, performance of an electrolyte solution may be excellent when the cyclic carbonate and the chain carbonate are mixed in a volume ratio of about 1:1 to about 1:9.

The lithium salt may be used without particular limitation as long as it is a compound capable of providing lithium ions used in the lithium secondary battery. Specifically, LiPF₆, LiClO₄, LiAsF₆, LiBF₄, LiSbF₆, LiAlO₄, LiAlCl₄, LiCF₃SO₃, LiC₄F₉SO₃, LiN(C₂F₅SO₃)₂, LiN(C₂F₅SO₂)₂, LiN(CF₃SO₂)₂, LiCl, LiI, or LiB(C₂O₄)₂ may be used as the lithium salt. The lithium salt may be used in a concentration range of 0.1 M to 5.0 M, particularly, 0.1 M to 3.0 M. If the concentration of the lithium salt is included within the above range, since the electrolyte may have appropriate conductivity and viscosity, excellent performance of the electrolyte may be obtained and lithium ions may effectively move.

In order to improve life characteristics of the battery, suppress the reduction in battery capacity, and improve discharge capacity of the battery, at least one additive, for example, a halo-alkylene carbonate-based compound such as difluoroethylene carbonate, pyridine, triethylphosphite, triethanolamine, cyclic ether, ethylenediamine, n-glyme, hexaphosphorictriamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, or aluminum trichloride, may be further included in the electrolyte in addition to the above electrolyte components. In this case, the additive may be included in an amount of 0.1 wt% to 10 wt%, specifically, 0.1 wt% to 5 wt% based on a total weight of the electrolyte.

Since the lithium secondary battery including the positive electrode active material according to the present invention exhibits excellent life characteristics and capacity characteristics as described above, the lithium secondary battery is suitable for portable devices, such as mobile phones, notebook computers, and digital cameras, and electric cars such as hybrid electric vehicles (HEVs).

Thus, according to another embodiment of the present invention, a battery module including the lithium secondary battery as a unit cell and a battery pack including the battery module are provided.

The battery module or the battery pack may be used as a power source of at least one medium and large sized device of a power tool; electric cars including an electric vehicle (EV), a hybrid electric vehicle, and a plug-in hybrid electric vehicle (PHEV); or a power storage system.

A shape of the lithium secondary battery of the present invention is not particularly limited, but a cylindrical type using a can, a prismatic type, a pouch type, or a coin type may be used.

The lithium secondary battery according to the present invention may not only be used in a battery cell that is used as a power source of a small device, but may also be used as a unit cell in a medium and large sized battery module including a plurality of battery cells.

### MODE FOR CARRYING OUT THE INVENTION

Hereinafter, examples of the present invention will be described in detail in such a manner that it may easily be carried out by a person with ordinary skill in the art to which the present invention pertains. The invention may, however, be embodied in many different forms and should not be construed as being limited to the examples set forth herein.

### Preparation Example

A 2.4 M composite transition metal aqueous solution was prepared by dissolving NiSO₄ and MnSO₄ in deionized water such that a molar ratio of nickel:manganese was 0.35:0.65. An inlet tube for each of the composite transition metal aqueous solution and a 25 wt% NaOH aqueous solution was connected to a 10 L continuous stirred tank reactor. After adding 2.6 L of deionized water and 3.5 mL of the 25 wt% NaOH aqueous solution to the reactor, the temperature was maintained at 50°C and stirring was performed at 150 rpm to prepare an initial solution with a pH of 12.0 to 13.0 (based on 25°C conversion). Also, N₂ gas was purged at 2 L/min to remove dissolved oxygen and create a non-oxidizing atmosphere inside the reactor. Thereafter, while stirring at 1,000 rpm, a composition ratio of gas injected into the reactor was changed from 100% N₂ such that a ratio of N₂:air was in a range of 99.5:0.5 to 85.0:15.0 to form a weak oxygen atmosphere, and the composite transition metal aqueous solution was continuously added into the reactor at a flow rate of 0.85 L/hr. Composite transition metal hydroxide seeds with a size of 3 µm to 5 µm were formed by adjusting an amount of NaOH added and RPM such that the pH reached 10.0 to 11.0 within 1 hour to 2 hours from the start of a reaction. Thereafter, a co-precipitation reaction was performed while maintaining the pH at 10.0 to 11.0 for 60 hours to grow composite transition metal hydroxide particles and the addition of the raw materials was terminated when a target particle size (10 µm) was reached. Thereafter, the particles were separated from a reaction solution, then washed, and dried to prepare a composite transition metal hydroxide having a composition of Ni_{0.35}Mn_{0.65}(OH)₂.

### Examples and Comparative Examples

### Examples 1 to 12

Lithium-rich manganese-based oxides having a composition represented by Formula 1 described in the present specification (see Table 4 below) were prepared by mixing the composite transition metal hydroxide having a composition represented by Ni_{0.35}Mn_{0.65}(OH)₂ which had been prepared in Preparation Example, LiOH, a first doping element (Q1)-containing raw material, and a second doping element (Q2)-containing raw material (see Table 1 below) such that a molar ratio of Li:(Ni+Mn):Q1:Q2 was as shown in Table 1 below (see Table 1 below), and sintering the mixture at a temperature of 910°C for 7 hours to 10 hours in an air atmosphere. In this case, the first doping element (Q1)-containing raw material was mixed such that an amount of the first doping element (Q1) was in a range of 200 ppm to 10,000 ppm (first doping element (Q1) addition amount, see Table 1 below) based on a total weight of the Ni_{0.35}Mn_{0.65}(OH)₂, and the second doping element (Q2)-containing raw material was mixed such that an amount of the second doping element (Q2) was in a range of 300 ppm to 5,000 ppm (second doping element (Q2) addition amount, see Table 1 below) based on the total weight of the Ni_{0.35}Mn_{0.65}(OH)₂.

The lithium-rich manganese-based oxides and a coating element (R)-containing raw material were mixed and heat-treated at a temperature of 400°C to 700°C (see Table 2 below) for 4 hours to 6 hours in an oxygen atmosphere to prepare positive electrode active materials of Examples 1 to 12 in which a coating portion including the coating element (R) was formed on the lithium-rich manganese-based oxides. In this case, the coating element (R)-containing raw material was mixed such that an amount of the coating element (R) was in a range of 300 ppm to 5,000 ppm (coating element (R) addition amount, see Table 3 below) based on a total weight of the lithium-rich manganese-based oxide. The coating portion was composed of a component including at least one selected from R, an R-O compound, a Li-R-O compound, and a Li-M'-R-O compound, and was a film type, an island type, or a combination thereof. Also, an amount of the coating portion was in a range of 0.05 part by weight to 0.3 part by weight based on 100 parts by weight of the lithium-rich manganese-based oxide.

The first doping element (Q1)-containing raw material, the second doping element (Q2)-containing raw material, the coating element (R)-containing raw material, the molar ratio, the amount of the first doping element (Q1)-containing raw material mixed, the amount of the second doping element (Q2)-containing raw material mixed, the heat treatment temperature, the amount of the coating element (R)-containing raw material mixed, and a relationship between the oxidation number of the first doping element (Q1), the oxidation number of the second doping element (Q2), and the oxidation number of the coating element (R) were listed in detail in Tables 1 to 3 below.

### Comparative Example 1

A lithium-rich manganese-based oxide having a composition represented by Li_{1.140}Mn_{0.560}Ni_{0.300}O₂ was prepared by mixing the composite transition metal hydroxide having a composition represented by Ni_{0.35}Mn_{0.65}(OH)₂ which had been prepared in Preparation Example and LiOH such that a molar ratio of Li:(Ni+Mn) was 1.140:0.860, and sintering the mixture at a temperature of 910°C for 10 hours in an air atmosphere.

The lithium-rich manganese-based oxide and Al(OH)₃ were mixed and heat-treated at a temperature of 500°C for 4 hours to 6 hours in an oxygen atmosphere to prepare a positive electrode active material in which a coating portion including aluminum (Al) was formed on the lithium-rich manganese-based oxide. In this case, the Al(OH)₃ was mixed such that an amount of the Al was 1,000 ppm based on a total weight of the lithium-rich manganese-based oxide. The coating portion was composed of a component including at least one selected from Al, an Al-O compound, a Li-Al-O compound, and a Li-M'-Al-O compound, and was a film type, an island type, or a combination thereof.

### Comparative Example 2

A lithium-rich manganese-based oxide having a composition represented by Li_{1.139}Mn_{0.555}Ni_{0.297}Zn_{0.001}Al_{0.008}O₂ was prepared by mixing the composite transition metal hydroxide having a composition represented by Ni_{0.35}Mn_{0.65}(OH)₂ which had been prepared in Preparation Example, LiOH, ZnO, and Al(OH)₃ such that a molar ratio of Li:(Ni+Mn):Zn:Al was 1.139:0.852:0.001:0.008, and sintering the mixture at a temperature of 910°C for 7 hours to 10 hours in an air atmosphere. In this case, the ZnO was mixed such that an amount of the Zn was 1,000 ppm based on a total weight of the Ni_{0.35}Mn_{0.65}(OH)₂, and the Al(OH)₃ was mixed such that an amount of the Al was 750 ppm based on the total weight of the Ni_{0.35}Mn_{0.65}(OH)₂.

The lithium-rich manganese-based oxide and WO₃ were mixed and heat-treated at a temperature of 600°C for 4 hours to 6 hours in an oxygen atmosphere to prepare a positive electrode active material in which a coating portion including W was formed on the lithium-rich manganese-based oxide. In this case, the WO₃ was mixed such that an amount of the W was 1,000 ppm based on a total weight of the lithium-rich manganese-based oxide. The coating portion was composed of a component including at least one selected from W, a W-O compound, a Li-W-O compound, and a Li-M'-W-O compound, and was a film type, an island type, or a combination thereof. Also, an amount of the coating portion was in a range of 0.05 part by weight to 0.3 part by weight based on 100 parts by weight of the lithium-rich manganese-based oxide.

### Comparative Example 3

A lithium-rich manganese-based oxide having a composition represented by Li_{1.137}Mn_{0.547}Ni_{0.293}Co_{0.016}Al_{0.008}O₂ was prepared by mixing the composite transition metal hydroxide having a composition represented by Ni_{0.35}Mn_{0.65}(OH)₂ which had been prepared in Preparation Example, LiOH, Co₂O₃, and Al(OH)₃ such that a molar ratio of Li:(Ni+Mn):Co:Al was 1.137:0.839:0.016:0.008, and sintering the mixture at a temperature of 910°C for 7 hours to 10 hours in an air atmosphere. In this case, the Co₂O₃ was mixed such that an amount of the Co was 3,300 ppm based on a total weight of the Ni_{0.35}Mn_{0.65}(OH)₂, and the Al(OH)₃ was mixed such that an amount of the Al was 750 ppm based on the total weight of the Ni_{0.35}Mn_{0.65}(OH)₂.

The lithium-rich manganese-based oxide and WO₃ were mixed and heat-treated at a temperature of 600°C for 4 hours to 6 hours in an oxygen atmosphere to prepare a positive electrode active material in which a coating portion including W was formed on the lithium-rich manganese-based oxide. In this case, the WO₃ was mixed such that an amount of the W was 1,000 ppm based on a total weight of the lithium-rich manganese-based oxide. The coating portion was composed of a component including at least one selected from W, a W-O compound, a Li-W-O compound, and a Li-M'-W-O compound, and was a film type, an island type, or a combination thereof. Also, an amount of the coating portion was in a range of 0.05 part by weight to 0.3 part by weight based on 100 parts by weight of the lithium-rich manganese-based oxide.

### Comparative Example 4

A lithium-rich manganese-based oxide having a composition represented by Li_{1.139}Mn_{0.555}Ni_{0.293}Zn_{0.001}Al_{0.008}O₂ was prepared by mixing the composite transition metal hydroxide having a composition represented by Ni_{0.35}Mn_{0.65}(OH)₂ which had been prepared in Preparation Example, LiOH, ZnO, and Al(OH)₃ such that a molar ratio of Li:(Ni+Mn):Zn:Al was 1.139:0.852:0.001:0.008, and sintering the mixture at a temperature of 910°C for 7 hours to 10 hours in an air atmosphere. In this case, the ZnO was mixed such that an amount of the Zn was 1,000 ppm based on a total weight of the Ni_{0.35}Mn_{0.65}(OH)₂, and the Al(OH)₃ was mixed such that an amount of the Al was 750 ppm based on the total weight of the Ni_{0.35}Mn_{0.65}(OH)₂.

The lithium-rich manganese-based oxide and Nb₂O₅ were mixed and heat-treated at a temperature of 600°C for 4 hours to 6 hours in an oxygen atmosphere to prepare a positive electrode active material in which a coating portion including Nb was formed on the lithium-rich manganese-based oxide. In this case, the Nb₂O₅ was mixed such that an amount of the Nb was 750 ppm based on a total weight of the lithium-rich manganese-based oxide. The coating portion was composed of a component including at least one selected from Nb, a Nb-O compound, a Li-Nb-O compound, and a Li-M'-Nb-O compound, and was a film type, an island type, or a combination thereof. Also, an amount of the coating portion was in a range of 0.05 part by weight to 0.3 part by weight based on 100 parts by weight of the lithium-rich manganese-based oxide.

### Comparative Example 5

A lithium-rich manganese-based oxide having a composition represented by Li_{1.139}Mn_{0.556}Ni_{0.298}Al_{0.008}O₂ was prepared by mixing the composite transition metal hydroxide having a composition represented by Ni_{0.35}Mn_{0.65}(OH)₂ which had been prepared in Preparation Example, LiOH, and Al(OH)₃ such that a molar ratio of Li:(Ni+Mn):Al was 1.139:0.853:0.008:0, and sintering the mixture at a temperature of 910°C for 7 hours to 10 hours in an air atmosphere. In this case, the Al(OH)₃ was mixed such that an amount of the Al was 750 ppm based on a total weight of the Ni_{0.35}Mn_{0.65}(OH)₂.

The lithium-rich manganese-based oxide and Co₂O₃ were mixed and heat-treated at a temperature of 700°C for 4 hours to 6 hours in an oxygen atmosphere to prepare a positive electrode active material in which a coating portion including Co was formed on the lithium-rich manganese-based oxide. In this case, the Co₂O₃ was mixed such that an amount of the Co was 1,000 ppm based on a total weight of the lithium-rich manganese-based oxide. The coating portion was composed of a component including at least one selected from Co, a Co-O compound, a Li-Co-O compound, and a Li-M'-Co-O compound, and was a film type, an island type, or a combination thereof. Also, an amount of the coating portion was in a range of 0.05 part by weight to 0.3 part by weight based on 100 parts by weight of the lithium-rich manganese-based oxide.

### Comparative Example 6

A lithium-rich manganese-based oxide having a composition represented by Li_{1.140}Mn_{0.558}Ni_{0.299}Ti_{0.003}O₂ was prepared by mixing the composite transition metal hydroxide having a composition represented by Ni_{0.35}Mn_{0.65}(OH)₂ which had been prepared in Preparation Example, LiOH, and TiO₂ such that a molar ratio of Li:(Ni+Mn):Ti was 1.140:0.857:0.003, and sintering the mixture at a temperature of 910°C for 7 hours to 10 hours in an air atmosphere. In this case, the TiO₂ was mixed such that an amount of the Ti was 1,400 ppm based on a total weight of the Ni_{0.35}Mn_{0.65}(OH)₂.

The lithium-rich manganese-based oxide and Al(OH)₃ were mixed and heat-treated at a temperature of 500°C for 4 hours to 6 hours in an oxygen atmosphere to prepare a positive electrode active material in which a coating portion including aluminum (Al) was formed on the lithium-rich manganese-based oxide. In this case, the Al(OH)₃ was mixed such that an amount of the Al was 1,000 ppm based on a total weight of the lithium-rich manganese-based oxide. The coating portion was composed of a component including at least one selected from Al, an Al-O compound, a Li-Al-O compound, and a Li-M'-Al-O compound, and was a film type, an island type, or a combination thereof.

### Comparative Example 7

A lithium-rich manganese-based oxide having a composition represented by Li_{1.140}Mn_{0.558}Ni_{0.299}Zr_{0.003}O₂ was prepared by mixing the composite transition metal hydroxide having a composition represented by Ni_{0.35}Mn_{0.65}(OH)₂ which had been prepared in Preparation Example, LiOH, and ZrO₂ such that a molar ratio of Li:(Ni+Mn):Zr was 1.140:0.857:0.003, and sintering the mixture at a temperature of 910°C for 7 hours to 10 hours in an air atmosphere. In this case, the ZrO₂ was mixed such that an amount of the Zr was 2,700 ppm based on a total weight of the Ni_{0.35}Mn_{0.65}(OH)₂.

The lithium-rich manganese-based oxide and Al(OH)₃ were mixed and heat-treated at a temperature of 500°C for 4 hours to 6 hours in an oxygen atmosphere to prepare a positive electrode active material in which a coating portion including aluminum (Al) was formed on the lithium-rich manganese-based oxide. In this case, the Al(OH)₃ was mixed such that an amount of the Al was 1,000 ppm based on a total weight of the lithium-rich manganese-based oxide. The coating portion was composed of a component including at least one selected from Al, an Al-O compound, a Li-Al-O compound, and a Li-M'-Al-O compound, and was a film type, an island type, or a combination thereof.

**[Table 1]**

| | First doping element (Q1)-containi ng raw material | Second doping element (Q2)-containi ng raw material | Li:(Ni+Mn):Q1:Q2 | Sint erin g temp erat ure (°C) | First doping element (Q1) addition amount (ppm) | Second doping element (Q2) addition amount (ppm) |
|---|---|---|---|---|---|---|
| Example 1 | WO₃ | Zr₂O₃ | 1.139:0.856:0.002:0.003 | | 1,000 | 2,799 |
| Example 2 | WO₃ | Zr₂O₃ | 1.139:0.853:0.005:0.003 | | 3,000 | 2,700 |
| Example 3 | WO₃ | TiO₂ | 1.139:0.856:0.002:0.003 | | 1,000 | 1,400 |
| Example 4 | WO₃ | TiO₂ | 1.139:0.853:0.005:0.003 | | 3,000 | 1,400 |
| Example 5 | WO₃ | Co₂O₃ | 1.137:0.840:0.015:0.008 | | 10,000 | 1,650 |
| Example 6 | WO₃ | Al(OH)₃ | 1.137:0.840:0.012:0.011 | | 7,990 | 1,000 |
| Example 7 | WO₃ | Al(OH)₃ | 1.135:0.832:0.012:0.021 | | 7,990 | 2,000 |
| Example 8 | WO₃ | MoO₃ | 1.138:0.850:0.011:0.000 3 | 910 | 7,400 | 270 |
| Example 9 | WO₃ | MoO₃ | 1.138:0.849:0.011:0.002 | | 7,000 | 1,820 |
| Example 10 | WO₃ | ZrO₂ | 1.138:0.848:0.011:0.003 | | 7,660 | 2,780 |
| Example 11 | WO₃ | Al(OH)₃ | 1.132:0.812:0.012:0.044 | | 7,990 | 4,120 |
| Example 12 | WO₃ | TiO₂ | 1.138:0.848:0.011:0.003 | | 7,000 | 1,400 |
| Comparative Example 1 | - | - | 1.140:0.860 | | - | - |
| Comparative Example 2 | ZnO | Al(OH)₃ | 1.139:0.852:0.001:0.008 | | 1,000 | 750 |
| Comparative Example 3 | Co₂O₃ | Al(OH)₃ | 1.137:0.839:0.016:0.008 | | 3,300 | 750 |
| Comparative Example 4 | ZnO | Al(OH)₃ | 1.139:0.852:0.001:0.008 | | 1,000 | 750 |
| Comparative Example 5 | Al(OH)₃ | - | 1.139:0.853:0.008 | | 750 | - |
| Comparative Example 6 | TiO₂ | - | 1.140:0.857:0.003 | | 1,400 | - |
| Comparative Example 7 | ZrO₂ | - | 1.140:0.857:0.003 | | 2,700 | - |

**[Table 2]**

| | Coating element (R)-containing raw material | Heat treatment temperature (°C) | Coating element (R) addition amount (ppm) |
|---|---|---|---|
| Example 1 | Co₂O₃ | | 3,300 |
| Example 2 | Co₂O₃ | | 3,300 |
| Example 3 | Co₂O₃ | | 3,300 |
| Example 4 | Co₂O₃ | | 3,300 |
| Example 5 | Co₂O₃ | | 3,300 |
| Example 6 | Co₂O₃ | | 3,300 |
| Example 7 | Co₂O₃ | 700 | 3,300 |
| Example 8 | Co₂O₃ | | 3,300 |
| Example 9 | Co₂O₃ | | 3,300 |
| Example 10 | Co₂O₃ | | 3,300 |
| Example 11 | Co₂O₃ | | 3,300 |
| Example 12 | Co₂O₃ | | 3,300 |
| Comparative Example 1 | Al(OH)₃ | 500 | 1,000 |
| Comparative Example 2 | WO₃ | 600 | 1,000 |
| Comparative Example 3 | WO₃ | 600 | 1,000 |
| Comparative Example 4 | Nb₂O₅ | 600 | 750 |
| Comparative Example 5 | Co₂O₃ | 700 | 3,300 |
| Comparative Example 6 | Al(OH)₃ | 500 | 1,000 |
| Comparative Example 7 | Al(OH)₃ | 500 | 1,000 |

**[Table 3]**

| | Oxidation number of Q1 | Oxidation number of Q2 | Oxidation number of R | Oxidation number of R < sum of oxidation numbers of Q |
|---|---|---|---|---|
| Example 1 | 6 | 3 | 3 | O |
| Example 2 | 6 | 3 | 3 | O |
| Example 3 | 6 | 4 | 3 | O |
| Example 4 | 6 | 4 | 3 | O |
| Example 5 | 6 | 3 | 3 | O |
| Example 6 | 6 | 3 | 3 | O |
| Example 7 | 6 | 3 | 3 | O |
| Example 8 | 6 | 6 | 3 | O |
| Example 9 | 6 | 6 | 3 | O |
| Example 10 | 6 | 4 | 3 | O |
| Example 11 | 6 | 3 | 3 | O |
| Example 12 | 6 | 4 | 3 | O |
| Comparative Example 1 | - | - | 3 | - |
| Comparative Example 2 | 2 | 3 | 6 | X |
| Comparative Example 3 | 3 | 3 | 6 | X |
| Comparative Example 4 | 2 | 3 | 5 | X |
| Comparative Example 5 | 3 | - | 3 | X |
| Comparative Example 6 | 4 | - | 3 | O |
| Comparative Example 7 | 4 | - | 3 | O |

### Experimental Examples

### Experimental Example 1: XRD Analysis

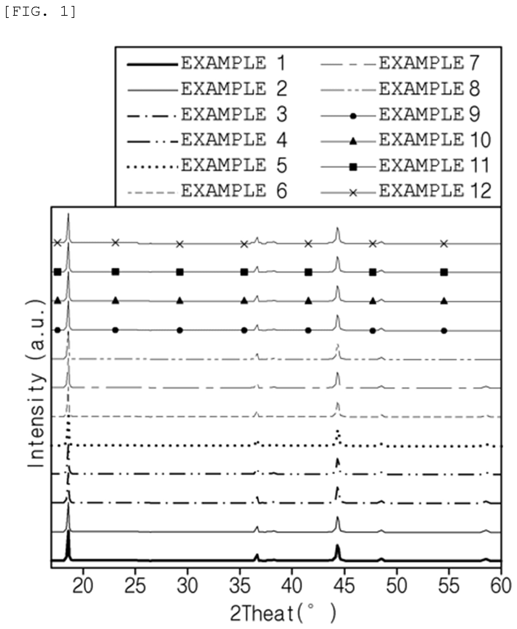

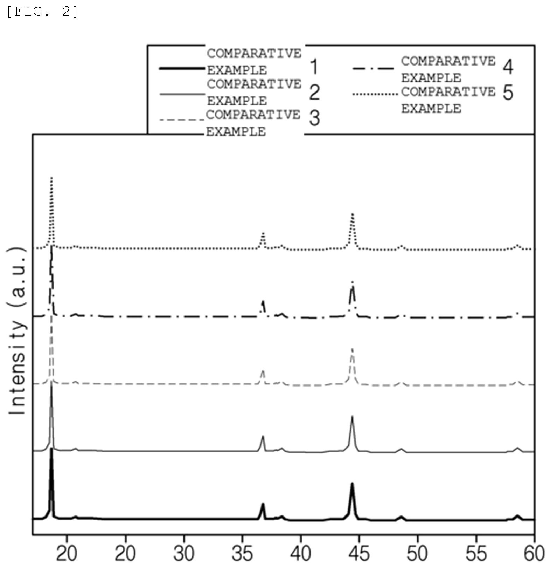

After X-ray diffraction (XRD) measurement was performed on each of the positive electrode active materials prepared in the examples, XRD data are illustrated in FIG. 1, and, after XRD measurement was performed on each of the positive electrode active materials prepared in the comparative examples, XRD data are illustrated in FIG. 2.

In this case, 2 g to 3 g of positive electrode active material particles was collected from each positive electrode active material powder, and the XRD was measured by an X-ray diffraction analysis method using Cu-Kα rays (wavelength 1.54 Å) at an accelerating voltage of 40 kV/40 mA and a scan rate of 0.2 °/sec in a 2θ range of 14° to 60°.

FIG. 1 is the XRD data of the positive electrode active materials prepared in Examples 1 to 12.

FIG. 2 is the XRD data of the positive electrode active materials prepared in Comparative Examples 1 to 5.

According to FIGS. 1 and 2, it was confirmed that the examples simultaneously included a Li₂MnO₃ phase and a LiM'O₂ phase (wherein M' is an element including at least one selected from Ni and Mn). Specifically, it was confirmed that the examples included the Li₂MnO₃ phase as a small peak present at 20.7°, and it was confirmed that the examples included the LiM'O₂ phase (wherein M' is an element including at least one selected from Ni and Mn) as a large peak present at about 18°.

### Experimental Example 2: ICP Analysis

After taking 0.1 g of each of the lithium-rich manganese-based oxides and the positive electrode active materials prepared in the examples and the comparative examples, 1 ml of hydrochloric acid was added and heated to dissolve each positive electrode active material. Thereafter, a small amount of hydrogen peroxide was added to promote a reaction and the positive electrode active material was completely dissolved to prepare a solution. Subsequently, an analysis sample was prepared by diluting the solution with deionized water such that a total volume of the solution was 10 ml. A weight ratio of constituent elements present in the analysis sample was measured using an inductively coupled plasma (ICP) instrument (PerkinElmer, OPTIMA 7300DV), and a composition of the lithium-rich manganese-based oxide, an amount (ppm) of the first doping element (Q1), an amount (ppm) of the second doping element (Q2), and an amount (ppm) of the coating element (R) are presented in Table 4 below. For reference, a measurement error of the amount of the element was about ±110 ppm.

**[Table 4]**

| | Composition | Amount of the doping element (Q1) (ppm) | Amount of the doping element (Q2) (ppm) | Amount of the coating element (R) (ppm) |
|---|---|---|---|---|
| Example 1 | Li_{1.139}Mn_{0.557}Ni_{0.299}W_{0.002}Zr_{0.003}O₂ | 972 | 2781 | 3301 |
| Example 2 | Li_{1.139}Mn_{0.556}Ni_{0.298}W_{0.005}Zr_{0.003}O₂ | 2908 | 2653 | 3277 |
| Example 3 | Li_{1.139}Mn_{0.557}Ni_{0.299}W_{0.002}Ti_{0.003}O₂ | 993 | 1356 | 3169 |
| Example 4 | Li_{1.139}Mn_{0.556}Ni_{0.298}W_{0.005}Ti_{0.003}O₂ | 2894 | 1431 | 3160 |
| Example 5 | Li_{1.137}Mn_{0. 547}Ni_{0. 293}W_{0.015}Co_{0.008}O₂ | 9956 | 1644 | 3277 |
| Example 6 | Li_{1.137}Mn_{0.547}Ni_{0.293}W_{0.012}Al_{0.011}O₂ | 7864 | 991 | 3187 |
| Example 7 | Li_{1.135}Mn_{0.542}Ni_{0.290}W_{0.002}Al_{0.012}O₂ | 7991 | 2105 | 3262 |
| Example 8 | Li_{1.138}Mn_{0.554}Ni_{0.297}Wo_{0.011}Mo_{0.0003}O₂ | 7352 | 253 | 3306 |
| Example 9 | Li_{1.138}Mn_{0.553}Ni_{0.296}W_{0.011}Mo_{0.002}O₂ | 6854 | 1805 | 3140 |
| Example 10 | Li_{1.138}Mn_{0.552}Ni_{0.296}W_{0.011}Zr_{0.002}O₂ | 7564 | 2776 | 3247 |
| Example 11 | Li_{1.132}Mn_{0. 529}Ni_{0.283}W_{0.012}Al_{0.044}O₂ | 7905 | 4115 | 3199 |
| Example 12 | Li_{1.138}Mn_{0.552}Ni_{0.296}W_{0.011}Ti_{0.003}O₂ | 6878 | 1405 | 3204 |
| Comparative Example 1 | Li_{1.140}Mn_{0. 560}Ni_{0.300}O₂ | - | - | 998 |
| Comparative Example 2 | Li_{1.139}Mn_{0.555}Ni_{0.297}Zn_{0.001}Al_{0.008}O₂ | 988 | 740 | 964 |
| Comparative Example 3 | Li_{1.137}Mn_{0.547}Ni_{0.293}Co_{0.016}Al_{0.008}O₂ | 3255 | 748 | 975 |
| Comparative Example 4 | Li_{1.139}Mn_{0. 555}Ni_{0.293}Zn_{0.001}Al_{0.008}O₂ | 988 | 740 | 734 |
| Comparative Example 5 | Li_{1.139}Mn_{0. 556}Ni_{0.298}Al_{0. 008}O₂ | 735 | - | 3297 |
| Comparative Example 6 | Li_{1.140}Mn_{0.558}Ni_{0.299}Ti_{0.003}O₂ | 1368 | - | 967 |
| Comparative Example 7 | Li_{1.140}Mn_{0.558}Ni_{0.299}Zr_{0.003}O₂ | 2691 | - | 978 |

According to Tables 3 and 4, it was confirmed that the positive electrode active materials prepared in Examples 1 to 12 included at least two doping elements (Q) selected from W, Al, Co, Zr, Re, V, Cr, Fe, Ga, Si, B, Ru, Ti, Nb, Mo, Mg, Na, and Pt, and included at least one coating element (R) selected from Zn, Al, Co, Ti, Nb, V, Mo, W, B, and Ni, wherein Q and R satisfied Equation 1 described in the present specification. In addition, it was confirmed that the positive electrode active materials prepared in Examples 1 to 12 included the lithium-rich manganese-based oxide having a composition represented by Formula 1 described in the present specification. Also, with respect to the positive electrode active materials prepared in Examples 1 to 12, it was confirmed that a sum of the amount of the first doping element (Q1) and the amount of the second doping element (Q2), that is, an amount of the doping elements (Q) was in a range of 500 ppm to 13,000 ppm based on the total weight of the lithium-rich manganese-based oxide, and it was confirmed that the amount of the coating element (R) included in the coating portion was in a range of 300 ppm to 4,000 ppm based on the total weight of the lithium-rich manganese-based oxide.

### Experimental Example 3: Analysis of Type of the Coating Portion

A positive electrode active material of each of the examples and the comparative examples, Super P as a conductive agent, and polyvinylidene fluoride (PVDF), as a binder, were mixed in a weight ratio of 92.5:3:4.5 in an N-methylpyrrolidone (NMP) solvent to prepare a positive electrode slurry. One surface of an aluminum current collector was coated with the above-prepared positive electrode slurry, dried at 130°C, and then rolled to have an electrode porosity of 26% to prepare a positive electrode.

In order to create a flat surface for electron probe microanalyzer (EPMA) cross-sectional analysis, the positive electrode was argon (Ar)-ion milled to obtain a cross section of a positive electrode sample, and a cross-sectional image of the positive electrode sample was then observed using a JEOL JXA-iHP200F instrument.

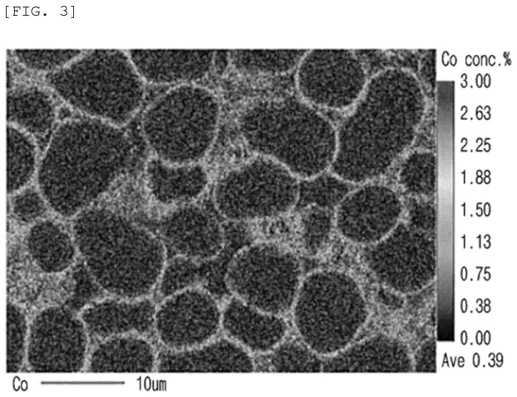

FIG. 3 is an EPMA cobalt element mapping image of the cross section of the positive electrode including the positive electrode active material prepared in Example 1.

According to FIG. 3, it was confirmed that a coating portion including cobalt was uniformly formed over an entire surface of the positive electrode active material prepared in Example 1 according to the present invention, and particularly, the coating portion including cobalt (green and red portions) was concentrated along adjacent boundaries between particles, wherein the coating portion was a film type, an island type, or a combination thereof.

### Experimental Example 4: Measurement of Average Particle Diameter of the Positive Electrode Active Material

In order to measure average particle diameters of the positive electrode active material particles prepared in the examples and the comparative examples, particle sizes of the positive electrode active materials prepared in the examples and the comparative examples were measured using a particle size analyzer (PSA) (Microtrac, S3500), and the results thereof are presented in Table 5 below.

**[Table 5]**

| | Average particle diameter (D₅₀) (µm) |
|---|---|
| Example 1 | 9.70 |
| Example 2 | 9.65 |
| Example 3 | 9.68 |
| Example 4 | 9.72 |
| Example 5 | 9.65 |
| Example 6 | 9.86 |
| Example 7 | 9.77 |
| Example 8 | 9.85 |
| Example 9 | 9.70 |
| Example 10 | 9.79 |
| Example 11 | 9.81 |
| Example 12 | 9.78 |
| Comparative Example 1 | 9.65 |
| Comparative Example 2 | 9.66 |
| Comparative Example 3 | 9.71 |
| Comparative Example 4 | 9.63 |
| Comparative Example 5 | 9.61 |
| Comparative Example 6 | 9.78 |
| Comparative Example 7 | 9.66 |

According to Table 5, it was confirmed that the average particle diameter (D₅₀) of the positive electrode active material was in a range of 4 µm to 12 µm.

### Experimental Example 5: Battery Characteristics Evaluation

### - Coin-Type Half-Cell Preparation

97.5 wt% of each of the positive electrode active materials prepared in the examples and the comparative examples, 1.0 wt% of Super P as a conductive agent, and 1.5 wt% of polyvinylidene fluoride (PVDF), as a binder, were mixed in a N-methylpyrrolidone (NMP) solvent to prepare a positive electrode slurry. One surface of an aluminum current collector was coated with the above-prepared positive electrode slurry, dried at 130°C, and then rolled to prepare each positive electrode.

A lithium metal electrode was used as a negative electrode, and an electrode assembly was prepared by disposing a porous polyethylene separator between the positive electrode and the negative electrode. A coin-type half-cell was prepared by disposing the electrode assembly in a battery case, and then injecting an electrolyte solution in which 1 M LiPF₆ was dissolved in an organic solvent in which ethylene carbonate (EC):ethyl methyl carbonate (EMC):diethyl carbonate (DEC) were mixed in a volume ratio of 3:4:3.

### - Evaluation of Battery Characteristics

The coin-type half-cell including each of the positive electrode active materials prepared in the examples and the comparative examples was subjected to a formation process, charged (0.33 C) to 4.4 V in a constant current-constant voltage (CC-CV) mode at 25°C, and then discharged (0.33 C) to 2.5 V in a CC mode to perform an initial charge and discharge process, and charge and discharge capacities in this case were measured. The measured charge and discharge capacities are presented in Table 6 below.

**[Table 6]**

| | Charge capacity (mAh/g) | Discharge capacity (mAh/g) |
|---|---|---|
| Example 1 | 213.7 | 205.3 |
| Example 2 | 215.2 | 201.4 |
| Example 3 | 213.7 | 204.5 |
| Example 4 | 213.8 | 202.3 |
| Example 5 | 215.7 | 204.8 |
| Example 6 | 210.8 | 201.9 |
| Example 7 | 211.0 | 202.3 |
| Example 8 | 216.1 | 201.7 |
| Example 9 | 212.8 | 203.9 |
| Example 10 | 214.6 | 200.7 |
| Example 11 | 214.8 | 205.0 |
| Example 12 | 215.0 | 203.7 |
| Comparative Example 1 | 206.1 | 192.3 |
| Comparative Example 2 | 208.8 | 195.6 |
| Comparative Example 3 | 209.0 | 197.1 |
| Comparative Example 4 | 208.2 | 196.0 |
| Comparative Example 5 | 205.5 | 191.9 |
| Comparative Example 6 | 203.3 | 189.7 |
| Comparative Example 7 | 207.3 | 189.2 |

According to Table 6, it was confirmed that the batteries including the positive electrode active materials prepared in Examples 1 to 12 had larger charge and discharge capacities than Comparative Example 1 that did not include a doping element and a coating element and Comparative Examples 5 to 7 which included only one type of doping element, and had larger charge and discharge capacities than Comparative Example 2, which included two types of doping elements, wherein the sum of the oxidation numbers of the doping elements was smaller than the oxidation number of the coating element, and Comparative Examples 3 and 4 in which the sum of the oxidation numbers of the doping elements was the same as the oxidation number of the coating element.

As a result, it was confirmed that the positive electrode active material including the doping elements (Q) and the coating element (R) according to Equation 1 of the present invention improved the charge and discharge capacities of the battery.

## Claims

1. A positive electrode active material comprising
a lithium-rich manganese-based oxide simultaneously including a Li₂MnO₃ phase and a LiM'O₂ phase; and
a coating portion formed on the lithium-rich manganese-based oxide,
wherein the lithium-rich manganese-based oxide comprises at least two doping elements (Q) selected from tungsten (W), aluminum (Al), cobalt (Co), zirconium (Zr), rhenium (Re), vanadium (V), chromium (Cr), iron (Fe), gallium (Ga), silicon (Si), boron (B), ruthenium (Ru), titanium (Ti), niobium (Nb), molybdenum (Mo), magnesium (Mg), sodium (Na), and platinum (Pt), and
the coating portion comprises at least one coating element (R) selected from zinc (Zn), Al, Co, Ti, Nb, V, Mo, W, B, and Ni, and
satisfying Equation 1: [Equation 1] 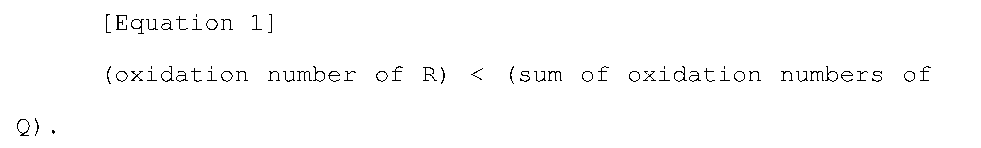 (oxidation number of R) < (sum of oxidation numbers of Q).

2. The positive electrode active material of claim 1, wherein the lithium-rich manganese-based oxide has a composition represented by Formula 1 or Formula 2:
[Formula 1] Li₁₊ₓMnₐ₁Ni_{b1}Q_{c1}O₂
wherein, in Formula 1,
Q comprises at least two selected from W, Al, Co, Zr, Re, V, Cr, Fe, Ga, Si, B, Ru, Ti, Nb, Mo, Mg, Na, and Pt, and
0.000<x≤0.200, 0.500≤a1<1.000, 0.200≤b1<0.500, and 0.0000<c1≤0.0300, and
[Formula 2] αLi₂Mn_{1-c2}Q_{c2}O₃·βLi(Mnₐ₂Ni_{b2}Q_{c3})O₂
wherein, in Formula 2,
Q comprises at least two selected from W, Al, Co, Zr, Re, V, Cr, Fe, Ga, Si, B, Ru, Ti, Nb, Mo, Mg, Na, and Pt, and
0<α<1, 0<β<1, 0.0000≤c2≤0.0100, 0.000<a2≤0.500, 0.000<b2≤0.500 0.0000≤c3≤0.0100, a2+b2+c3=1.000, and c2+c3>0.0000.

3. The positive electrode active material of claim 1, wherein an amount of the doping elements (Q) is in a range of 500 ppm to 13,000 ppm based on a total weight of the lithium-rich manganese-based oxide.

4. The positive electrode active material of claim 1, wherein a type of the coating portion is one of a film type, an island type, or a combination thereof.

5. The positive electrode active material of claim 1, wherein the coating portion comprises at least one selected from R, an R-O compound, a Li-R-O compound, and a Li-M'-R-O compound.

6. The positive electrode active material of claim 1, wherein an amount of the coating portion is in a range of 0.05 part by weight to 0.3 part by weight based on 100 parts by weight of the lithium-rich manganese-based oxide.

7. The positive electrode active material of claim 1, wherein an amount of the coating element (R) comprised in the coating portion is in a range of 300 ppm to 4,000 ppm based on a total weight of the lithium-rich manganese-based oxide.

8. The positive electrode active material of claim 1, wherein the oxidation numbers of Q are in a range of 3 to 6.

9. The positive electrode active material of claim 1, wherein Q comprises at least two selected from W, Al, Zr, Ti, Mo, and Co, and
R comprises at least one selected from Zn, Al, Co, Ti, Nb, V, Mo, and W.

10. The positive electrode active material of claim 1, wherein an average particle diameter (D₅₀) is in a range of 4 µm to 12 µm.

11. A method of preparing a positive electrode active material, the method comprising the steps of:
(A) mixing a composite transition metal hydroxide, a lithium (Li)-containing raw material, and a raw material containing doping elements (Q) to prepare a mixture;
(B) sintering the mixture to prepare a lithium-rich manganese-based oxide; and
(C) mixing the lithium-rich manganese-based oxide with a coating element (R)-containing raw material and performing a heat treatment to form a coating portion,
wherein the sintering is performed at a temperature of 800°C to 1,000°C in an air atmosphere,
the doping elements (Q) are at least two selected from tungsten (W), aluminum (Al), cobalt (Co), zirconium (Zr), rhenium (Re), vanadium (V), chromium (Cr), iron (Fe), gallium (Ga), silicon (Si), boron (B), ruthenium (Ru), titanium (Ti), niobium (Nb), molybdenum (Mo), magnesium (Mg), sodium (Na), and platinum (Pt),
the coating element (R) is at least one selected from zinc (Zn), Al, Co, Ti, Nb, V, Mo, W, B, and Ni, and
the doping elements (Q) and the coating element (R) satisfy Equation 1: [Equation 1] 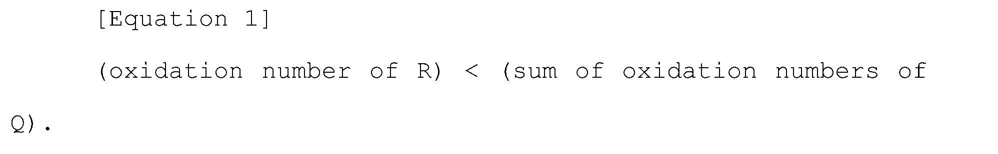 (oxidation number of R) < (sum of oxidation numbers of Q).

12. The method of claim 11, wherein the raw material containing doping elements (Q) is at least one selected from oxide, carbonate, nitrogen oxides, hydroxide, oxyhydroxide, and halide which include the doping elements (Q).

13. The method of claim 11, wherein the raw material containing doping elements (Q) is mixed such that an amount of the doping elements (Q) is in a range of 500 ppm to 13,500 ppm based on a total weight of the composite transition metal hydroxide.

14. The method of claim 11, wherein the coating element (R)-containing raw material is at least one selected from oxide, carbonate, nitrogen oxides, hydroxide, oxyhydroxide, and halide which include the coating element (R).

15. The method of claim 11, wherein the coating element (R)-containing raw material is mixed such that an amount of the coating element (R) is in a range of 300 ppm to 5,000 ppm based on a total weight of the lithium-rich manganese-based oxide.

16. The method of claim 11, wherein the heat treatment is performed at a temperature of 400°C to 700°C.

17. A positive electrode comprising the positive electrode active material of any one of claims 1 to 10.

18. A lithium secondary battery comprising the positive electrode of claim 17.
